# EUROPEAN PATENT APPLICATION

(11) **EP 4 775 822 A1**
(43) Date of publication of application: **15.07.2026**
(21) Application number: 26151097.8
(22) Date of filing: 09.01.2026
(51) Int. Cl.: F02C 7/14, B64D 27/33

(54) **AIRCRAFT PROPULSION SYSTEM WITH ELECTRIC MACHINE SYSTEM COOLING CIRCUIT**

(30) Priority: 09.01.2025 US 202519014903
(71) Applicant: RTX Corporation, Farmington, CT 06032 (US)
(72) Inventor: CLARK, Thomas E., Wells, 04090 (US); YAZICI, Murat, Glastonbury, 06033 (US)
(74) Representative: Dehns

(57) **Abstract**

An apparatus is provided for an aircraft. This apparatus includes a turbine engine (24), a first electric machine (100A), a first controller (102A), a second electric machine (102A), a second controller (102B) and a first fluid circuit (134). The first electric machine is operatively coupled to the turbine engine. The first controller is configured to control operation of the first electric machine. The second electric machine is operatively coupled to the turbine engine. The second controller is configured to control operation of the second electric machine. The first fluid circuit is configured to circulate a first liquid to cool and/or lubricate the first electric machine, the first controller, the second electric machine and the second controller.

## Description

### BACKGROUND OF THE DISCLOSURE

### 1. Technical Field

This disclosure relates generally to an aircraft powerplant and, more particularly, to cooling various components of the aircraft powerplant.

### 2. Background Information

An aircraft powerplant includes various components which may utilize heat dissipation during aircraft powerplant operation. Various heat dissipation systems and methods are known in the art. While these known heat dissipation systems and methods have various benefits, there is still room in the art for improvement.

### SUMMARY OF THE DISCLOSURE

According to an aspect of the present disclosure, an apparatus is provided for an aircraft. This apparatus includes a turbine engine, a first electric machine, a first controller, a second electric machine, a second controller and a first fluid circuit. The first electric machine is operatively coupled to the turbine engine. The first controller is configured to control operation of the first electric machine. The second electric machine is operatively coupled to the turbine engine. The second controller is configured to control operation of the second electric machine. The first fluid circuit is configured to circulate a first liquid to cool and/or lubricate the first electric machine, the first controller, the second electric machine and the second controller.

According to another aspect of the present disclosure, another apparatus is provided for an aircraft that includes an aircraft propulsion system. The aircraft propulsion system includes a propulsor rotor, an engine case, a first electric machine, a second electric machine, a first controller, a second controller, an electrical system and a first fluid circuit. The engine case is radially next to and circumscribes the propulsor rotor. The first controller is configured to electrically couple the first electric machine to the electrical system. The first controller is also configured to control operation of the first electric machine. The second controller is configured to electrically couple the second electric machine to the electrical system. The second controller is also configured to control operation of the second electric machine. The first fluid circuit is configured to circulate a first liquid to service the first electric machine, the second electric machine, the first controller and the second controller.

According to still another aspect of the present disclosure, another apparatus is provided for an aircraft. The apparatus includes a turbofan engine, a first electric machine, a first controller, a second electric machine, a second controller and a first fluid circuit. The turbofan engine includes an inner case and an outer case spaced radially outboard from the inner case. The first electric machine is arranged with the inner case. The first controller is configured to control operation of the first electric machine. The first controller is arranged with the outer case. The second electric machine is arranged with the inner case. The second controller is configured to control operation of the second electric machine. The second controller is arranged with the outer case. The first fluid circuit is configured to circulate a first liquid to service the first electric machine, the first controller, the second electric machine and the second controller.

The following optional features may be applied to any of the above aspects.

The first controller and/or the second controller may be mounted with the engine case.

The first controller may be configured upstream of the first electric machine along the first fluid circuit. In addition or alternatively, the second controller may be configured upstream of the second electric machine along the first fluid circuit.

The first controller and the second controller may be arranged in parallel along the first fluid circuit.

The first electric machine and the second electric machine may be arranged in parallel along the first fluid circuit.

The first fluid circuit may include a first circuit reservoir configured to contain a quantity of the first liquid. The first circuit reservoir may be arranged along the first fluid circuit: downstream from the first controller and upstream of the first electric machine; and/or downstream from the second controller and upstream of the second electric machine.

The first fluid circuit may include a first circuit reservoir configured to contain a quantity of the first liquid. The first circuit reservoir may be arranged along the first fluid circuit: upstream of the first controller and downstream from the first electric machine; and/or upstream of the second controller and downstream of the second electric machine.

The first fluid circuit may include a first circuit pump configured to pump the first liquid through the first fluid circuit. The first circuit pump may be arranged along the first fluid circuit: downstream from the first controller and upstream of the first electric machine; and/or downstream from the second controller and upstream of the second electric machine.

The first fluid circuit may include a first circuit pump configured to pump the first liquid through the first fluid circuit. The first circuit pump may be arranged along the first fluid circuit: upstream of the first controller and downstream from the first electric machine; and/or upstream of the second controller and downstream of the second electric machine.

The first fluid circuit may include a heat exchanger. The heat exchanger may be arranged along the first fluid circuit: upstream of the first controller and downstream from the first electric machine; and/or upstream of the second controller and downstream of the second electric machine.

The first fluid circuit may include a heat exchanger. The heat exchanger may be configured as or otherwise include a liquid-to-air heat exchanger.

The first fluid circuit may include a heat exchanger. The heat exchanger may be configured as or otherwise include a liquid-to-liquid heat exchanger.

The first fluid circuit may include a first heat exchanger and a second heat exchanger arranged in parallel along the first fluid circuit.

The first fluid circuit may include a first heat exchanger, a second heat exchanger and a flow regulator configured to selectively direct the first liquid into the first heat exchanger and/or the second heat exchanger.

The first fluid circuit may include a first controller section leg, a second controller section leg and a flow regulator. The first controller section leg may be in thermal communication with the first controller. The second controller section leg may be in thermal communication with the second controller. The flow regulator may be configured to selectively direct the first liquid into the first controller section leg and/or the second controller section leg.

The first fluid circuit may include a flow regulator configured to selectively direct the first liquid into the first electric machine and/or the second electric machine.

The apparatus may also include an electrical system. The first controller may be configured to electrically couple the electrical system to the first electric machine. The second controller may be configured to electrically couple the electrical system to the first electric machine.

The first electric machine may be configurable as at least one of a first electric motor or a first electric generator. In addition or alternatively, the second electric machine may be configurable as a second electric motor and/or a second electric generator.

The turbine engine comprises may include a first rotating structure and a second rotating structure. The first rotating structure may include a first bladed rotor. The second rotating structure may include a second bladed rotor. The second rotating structure may be operable to rotate independent of the first rotating structure. The first electric machine may be operatively coupled to the first rotating structure. The second electric machine may be operatively coupled to the second rotating structure.

The turbine engine may include a ducted propulsor rotor configured to generate aircraft thrust.

The turbine engine may be configured as a turbofan engine.

The turbine engine may include an engine case. The first electric machine and/or the second electric machine may be arranged with the engine case. The first controller and/or the second controller may be arranged remote from the engine case.

The apparatus may also include a second fluid circuit configured to circulate a second liquid to cool and/or lubricate one or more components of the turbine engine. The second fluid circuit may be fluidly discrete from the first fluid circuit.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial schematic illustration of an aircraft propulsion system.
FIG. 2 is a schematic illustration of a portion of the aircraft propulsion system at an electric machine system.
FIG. 3 is a schematic illustration of a portion of the aircraft propulsion system at a working fluid system with multiple fluid circuits.
FIGS. 4 and 5 are schematic illustrations of an electric machine system fluid circuit with various component arrangements.
FIG. 6 is a schematic illustration of a portion of the aircraft propulsion system with electric machine system members arranged with a common structure.
FIGS. 7 and 8 are schematic illustrations of a portion of the aircraft propulsion system with its electric machine system members arranged with different structures.
FIG. 9 is a schematic illustration of a portion of the aircraft propulsion system with at least its electric machine system fluid circuit arranged with a common structure.
FIG. 10 is a schematic illustration of a portion of the aircraft propulsion system with a remotely located heat exchanger.
FIG. 11 is a schematic illustration of a portion of the aircraft propulsion system with a remotely located reservoir.

### DETAILED DESCRIPTION

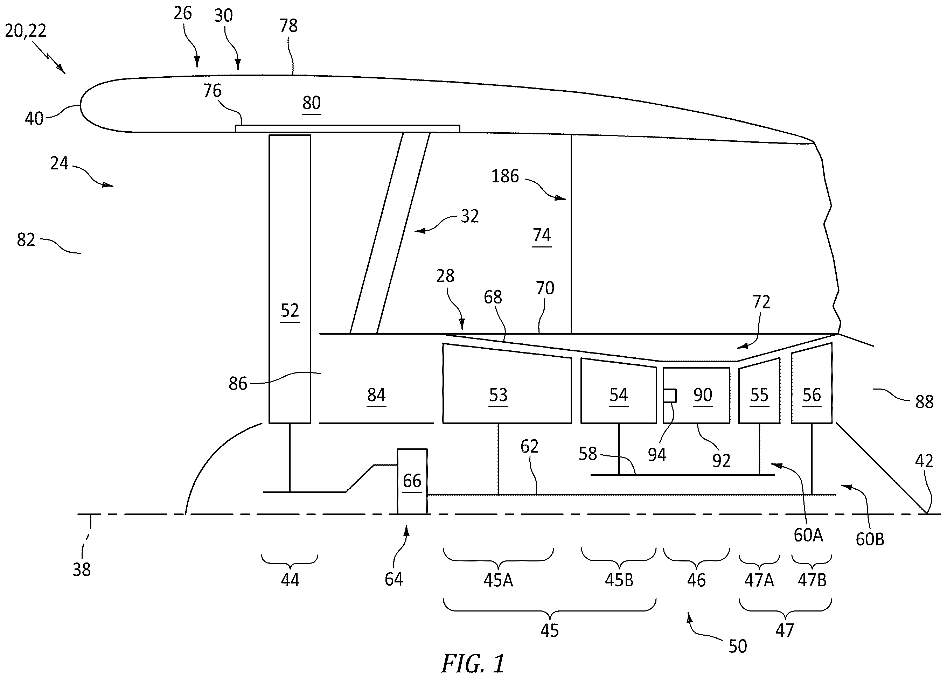

FIG. 1 illustrates a powerplant 20 for an aircraft. The aircraft may be an airplane, a drone (e.g., an unmanned aerial vehicle (UAV)) or any other manned or unmanned aerial vehicle or system. For ease of description, the aircraft powerplant 20 is described below as a propulsion system 22 for the aircraft and, more particularly, as a turbofan propulsion system. The aircraft powerplant 20 of the present disclosure, however, is not limited to such an exemplary propulsion system. The aircraft powerplant 20, for example, may also be configured as an electrical power system for the aircraft.

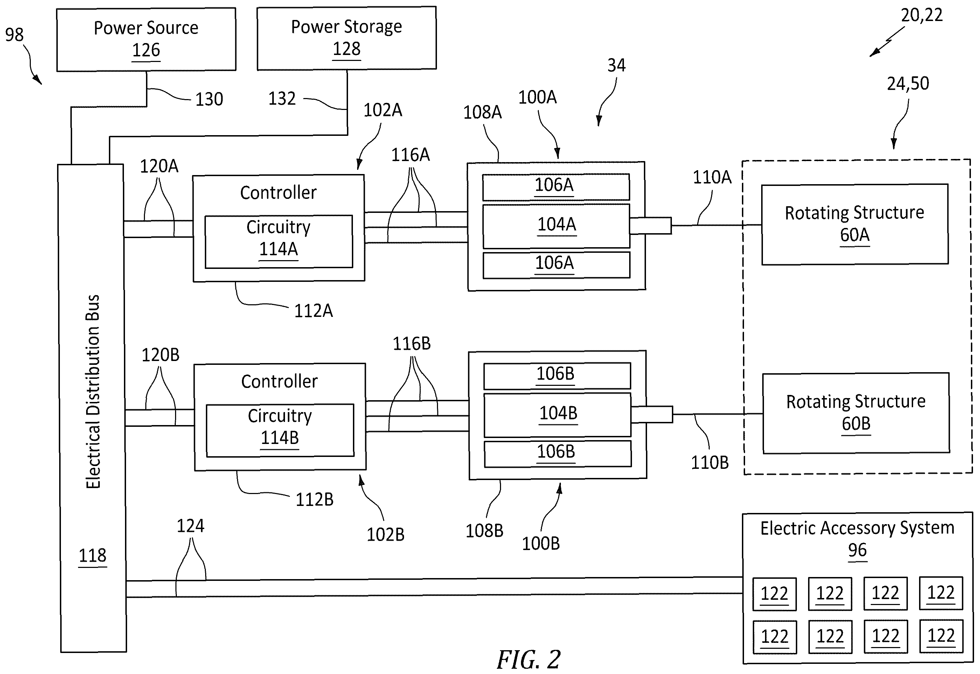

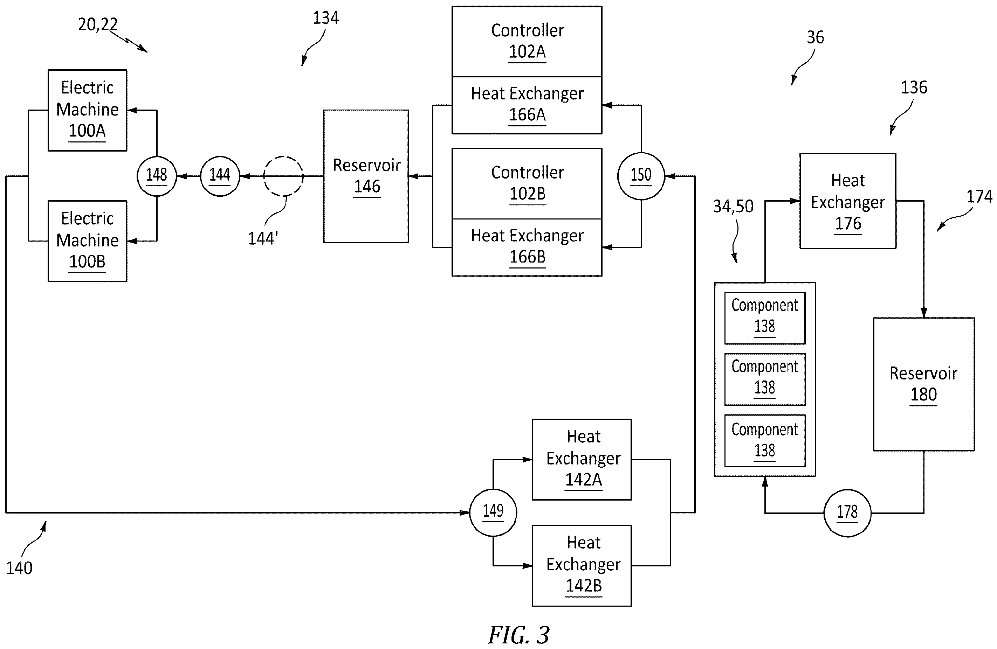

The aircraft propulsion system 22 includes a gas turbine engine 24 (e.g., a turbofan engine) housed within a stationary propulsion system housing 26, which propulsion system housing 26 of FIG. 1 includes an inner housing structure 28, an outer housing structure 30 and a guide vane structure 32 (e.g., a fan exit guide vane (FEGV) structure) extending radially between and connected to the inner housing structure 28 and the outer housing structure 30. The aircraft propulsion system 22 also includes an electric machine system 34 (see FIG. 2) and a working fluid system 36 (see FIG. 3). The aircraft propulsion system 22 extends axially along an axis 38 between an axial forward, upstream end 40 of the aircraft propulsion system 22 and an axial aft, downstream end 42 of the aircraft propulsion system 22. Briefly, the propulsion system axis 38 may be a centerline axis of the aircraft propulsion system 22, the turbine engine 24 and/or one or more of its members. The propulsion system axis 38 may also or alternatively be a rotational axis for one or more members of the turbine engine 24.

The aircraft propulsion system 22 and its turbine engine 24 of FIG. 1 include a propulsor section 44 (e.g., a fan section), a compressor section 45, a combustor section 46 and a turbine section 47. The compressor section 45 of FIG. 1 includes a low pressure compressor (LPC) section 45A and a high pressure compressor (HPC) section 45B. The turbine section 47 of FIG. 1 includes a high pressure turbine (HPT) section 47A and a low pressure turbine (LPT) section 47B. Here, at least (or only) the LPC section 45A, the HPC section 45B, the combustor section 46, the HPT section 47A and the LPT section 47B collectively form a core 50 of the turbine engine 24.

The engine sections 44-47B may be arranged sequentially along the propulsion system axis 38 within the propulsion system housing 26. The propulsor section 44 includes a bladed propulsor rotor 52; e.g., a fan rotor. The LPC section 45A includes a bladed low pressure compressor (LPC) rotor 53. The HPC section 45B includes a bladed high pressure compressor (HPC) rotor 54. The HPT section 47A includes a bladed high pressure turbine (HPT) rotor 55. The LPT section 47B includes a bladed low pressure turbine (LPT) rotor 56.

The HPC rotor 54 is coupled to and rotatable with the HPT rotor 55. The HPC rotor 54 of FIG. 1, for example, is connected to the HPT rotor 55 through a high speed shaft 58. At least (or only) the HPC rotor 54, the HPT rotor 55 and the high speed shaft 58 collectively form a high speed rotating structure 60A; e.g., a high speed spool of the engine core 50. This high speed rotating structure 60A of FIG. 1 and its members 54, 55 and 58 are rotatable about the propulsion system axis 38. However, it is contemplated the high speed rotating structure 60A may alternatively be rotatable about another axis radially and/or angularly offset from the rotational axis of the propulsor rotor 52 and/or the centerline axis of the turbine engine 24.

The LPC rotor 53 is coupled to and rotatable with the LPT rotor 56. The LPC rotor 53 of FIG. 1, for example, is connected to the LPT rotor 56 through a low speed shaft 62. At least (or only) the LPC rotor 53, the LPT rotor 56 and the low speed shaft 62 collectively form a low speed rotating structure 60B; e.g., a low speed spool of the engine core 50. This low speed rotating structure 60B is further coupled to the propulsor rotor 52 through a drivetrain 64. The drivetrain 64 may be configured as a geared drivetrain, where a geartrain 66 (e.g., a transmission, a speed change device, an epicyclic geartrain, etc.) is disposed between and operatively couples the propulsor rotor 52 to the low speed rotating structure 60B and its LPT rotor 56. With this arrangement, the propulsor rotor 52 may rotate at a different (e.g., slower) rotational speed than the low speed rotating structure 60B and its LPT rotor 56. Alternatively, the drivetrain 64 may be configured as a direct drive drivetrain, where the geartrain 66 is omitted. With such an arrangement, the propulsor rotor 52 rotates at a common (the same) rotational speed as the low speed rotating structure 60B and its LPT rotor 56. The low speed rotating structure 60B of FIG. 1 and its members 53, 56 and 62 as well as the propulsor rotor 52 are rotatable about the propulsion system axis 38. However, it is contemplated the low speed rotating structure 60B may alternatively be rotatable about another axis radially and/or angularly offset from the rotational axis of the propulsor rotor 52 and/or the centerline axis of the turbine engine 24.

The inner housing structure 28 of FIG. 1 includes an inner case 68 (e.g., a core case) for the turbine engine 24, an inner nacelle structure 70 (sometimes referred to as an inner fixed structure (IFS)) and an internal inner housing compartment 72. The inner case 68 is disposed radially outboard of, extends axially along and may circumscribe one or more or all of the engine sections 45A-47B and the engine rotors 53-56. The inner case 68 may thereby house and provide a support structure for the respective engine sections 45A-47B and the engine rotors 53-56. The inner nacelle structure 70 is configured to provide an aerodynamic cover over the engine core 50 and its inner case 68. The inner housing compartment 72 of FIG. 1 is formed by and is disposed radially between the inner case 68 and an inner barrel of the inner nacelle structure 70. The inner housing structure 28 and its inner nacelle structure 70 may also form a radial inner peripheral boundary of a (e.g., annular) bypass flowpath 74 within the aircraft propulsion system 22.

The outer housing structure 30 of FIG. 1 includes an outer case 76 (e.g., a fan case) for the turbine engine 24, an outer nacelle structure 78 and an internal outer housing compartment 80. The outer case 76 is disposed radially outboard of, extends axially along and may circumscribe the propulsor section 44 and its propulsor rotor 52. The outer case 76 may thereby house and provide a containment structure for the propulsor section 44 and its propulsor rotor 52. The outer nacelle structure 78 is configured to provide an aerodynamic cover over the outer case 76. The outer housing compartment 80 of FIG. 1 is at least partially formed by and disposed radially between the outer case 76 and an outer portion (e.g., fan cowls) of the outer nacelle structure 78. The outer housing structure 30 and its outer nacelle structure 78 may also form a radial outer peripheral boundary of the bypass flowpath 74.

During operation, ambient air from outside of the aircraft enters the aircraft propulsion system 22 and its turbine engine 24 through an airflow inlet 82. This air is directed across the propulsor section 44 and into a (e.g., annular) core flowpath 84 and the bypass flowpath 74. The core flowpath 84 of FIG. 1 extends sequentially through the LPC section 45A, the HPC section 45B, the combustor section 46, the HPT section 47A and the LPT section 47B from an airflow inlet 86 into the core flowpath 84 to a combustion products exhaust 88 out from the core flowpath 84 and the engine core 50. The air entering the core flowpath 84 may be referred to as "core air". The bypass flowpath 74 extends through a bypass duct, which bypass flowpath 74 and bypass duct bypass (e.g., are disposed radially outboard of and extend along) the engine core 50 and the inner housing structure 28. The air within the bypass flowpath 74 may be referred to as "bypass air".

The core air is compressed by the LPC rotor 53 and the HPC rotor 54 and is directed into a combustion chamber 90 (e.g., annular combustion chamber) of a combustor 92 (e.g., annular combustor) in the combustor section 46. Fuel is injected into the combustion chamber 90 by one or more fuel injectors 94 and mixed with the compressed core air to provide a fuel-air mixture. This fuel-air mixture is ignited and combustion products thereof flow through and sequentially drive rotation of the HPT rotor 55 and the LPT rotor 56 about the propulsion system axis 38. The rotation of the HPT rotor 55 and the LPT rotor 56 respectively drive rotation of the HPC rotor 54 and the LPC rotor 53 about the propulsion system axis 38 and, thus, compression of the air received from the core inlet 86. The rotation of the LPT rotor 56 also drives rotation of the propulsor rotor 52 about the propulsion system axis 38 through the drivetrain 64 and its geartrain 66. The rotation of the propulsor rotor 52 propels the bypass air through and out of the bypass flowpath 74. The propulsion of the bypass air may account for a majority of thrust generated by the turbine engine 24 of FIG. 1. Briefly, within the bypass flowpath 74, the guide vane structure 32 conditions (e.g., straightens out, de-swirls, etc.) the flow of bypass air propelled by the propulsor rotor 52 to enhance the forward thrust.

While the turbine engine 24 is described above with a particular two rotating structure arrangement, the present disclosure is not limited thereto. For example, the LPC rotor 53 may be omitted to configure the LPT rotor 56 as a power turbine (PT) rotor for the propulsor rotor 52. In another example, the turbine engine 24 may also include another rotating structure; e.g., an intermediate speed spool for the engine core 50.

Referring to FIG. 2, the electric machine system 34 is electrically coupled to an optional electric accessory system 96 and an electrical system 98 for the aircraft and its aircraft propulsion system 22. The electric machine system 34 of FIG. 2 includes one or more electric machines 100A and 100B (generally referred to as "100") and one or more electric machine (EM) controllers 102A and 102B (generally referred to as "102"). For ease of description, each electric machine 100 of FIG. 2 is described below as being electrically coupled to, controlled by and/or otherwise associated with a single, dedicated one of the EM controllers 102. However, it is contemplated a single EM controller may alternatively be electrically coupled to, may control and/or may otherwise be associated with multiple electric machines. It is also contemplated multiple EM controllers may be electrically coupled to, may control and/or may otherwise be associated with one or more common electric machines.

Each electric machine 100A, 100B of FIG. 2 includes an electric machine rotor 104A, 104B (generally referred to as "104"), an electric machine stator 106A, 106B (generally referred to as "106") and an electric machine housing 108A, 108B (generally referred to as "108"); e.g., a case. The machine rotor 104 is rotatable about a rotational axis of the machine rotor 104, which rotational axis may also be an axial centerline of the electric machine 100. The machine stator 106 of FIG. 2 is radially outboard of and circumscribes the machine rotor 104. With this arrangement, each electric machine 100 is configured as a radial flux electric machine. The electric machines 100 of the present disclosure, however, are not limited to such an exemplary rotor-stator configuration nor to radial flux arrangements. The machine rotor 104, for example, may alternatively be radially outboard of and circumscribe the machine stator 106. In another example, the machine rotor 104 may be axially next to the machine stator 106 configuring the respective electric machine 100 as an axial flux electric machine. Referring again to FIG. 2, the machine rotor 104 and the machine stator 106 are at least partially or completely housed within an interior of the machine housing 108.

Each electric machine 100A, 100B may be operatively coupled to a respective one of the engine rotating structures 60A, 60B (generally referred to as "60"). Each machine rotor 104A, 104B of FIG. 2, for example, is mechanically coupled to and rotatable with the respective engine rotating structure 60A, 60B through a drivetrain 110A, 110B (generally referred to as "110"). This drivetrain 110 may be configured as or otherwise include a shaft, a tower shaft assembly, an accessory gearbox, an angle gearbox, and/or the like. For ease of description, each machine rotor 104 of FIG. 2 is described below as being coupled to and rotatable with a unique one of the engine rotating structures 60 of the turbine engine 24. However, it is contemplated multiple machine rotors may alternatively be coupled to and rotatable with a common engine rotating structure. It is also contemplated a single one of the machine rotors may be coupled to and rotatable with multiple engine rotating structures, directly or through another device such as a differential or a clutch system. In addition, while the electric machines 100 are described above as being coupled to the engine rotating structures 60, it is contemplated the machine rotor 104 of one or more of the electric machines 100 may alternatively be operatively coupled to another rotating device through the drivetrain 110 such as, but not limited to, a pump rotor, an auxiliary compressor rotor, an actuator rotor, or the like.

Each electric machine 100 of FIG. 2 may be configurable as an electric motor and/or an electric generator; e.g., an electric motor-generator. For example, during a motor mode of operation, a respective one of the electric machines 100 may operate as the electric motor to convert electricity received from the aircraft electrical system 98 into mechanical power. The machine stator 106, for example, may generate an electromagnetic field with the machine rotor 104 using a current of electricity received from the aircraft electrical system 98 through the respective EM controller 102. This electromagnetic field may drive rotation of the machine rotor 104. The machine rotor 104, in turn, may provide mechanical power to and drive rotation of the respective engine rotating structure 60 through the respective drivetrain 110. This mechanical power may be provided to boost power or completely power the rotation of the respective engine rotating structure 60. By contrast, during a generator mode of operation, the respective electric machine 100 may operate as the electric generator to convert mechanical power received from the respective engine rotating structure 60 into electricity. Rotation of the machine rotor 104, for example, may be rotationally driven by rotation of the respective engine rotating structure 60 through the respective drivetrain 110. The rotation of the machine rotor 104 may generate an electromagnetic field with the machine stator 106, and the machine stator 106 may convert energy from the electromagnetic field into electricity. The respective electric machine 100 may then provide a current of electricity to the aircraft electrical system 98 through the respective EM controller 102 for storage and/or further use. The electric machines 100 of the present disclosure, however, are not limited to such exemplary operation. For example, one, some or all of the electric machines 100 may alternatively each be configured as a dedicated electric generator; e.g., without the electric motor functionality. In another example, one, some or all of the electric machines 100 may alternatively each be configured as a dedicated electric motor; e.g., without the electric generator functionality.

Each EM controller 102A, 102B includes a controller housing 112A, 112B (generally referred to as "112") and internal controller circuitry 114A, 114B (generally referred to as "114"). The controller housing 112 may be configured as an enclosed case (e.g., a closed or sealed container) for the respective controller circuitry 114. The controller circuitry 114 is disposed within an interior of the controller housing 112; e.g., an internal chamber or other volume(s) within and enclosed by the controller housing 112. The controller circuitry 114 includes various electrical components, connectors and the like. Examples of the electrical components include, but are not limited to, printed circuit board(s) (PCB(s)), electrical inductor(s), electrical inverter(s), electrical amplifier(s), electrical switch(es) (e.g., contactor(s), relay(s), etc.), processing device(s), memory module(s), communication module(s), electrical transformer(s), electrical rectifier(s), and/or the like.

Each EM controller 102A, 102B is electrically coupled to a respective one of the electric machines 100A, 100B through one or more electric cables 116A, 116B (generally referred to as "116"); e.g., high voltage electric cables, power feeder cables, etc. More particularly, the controller circuitry 114 of each EM controller 102 is electrically coupled to the respective electric machine 100 and its machine stator 106 through the respective electric cables 116. Similarly, each EM controller 102A, 102B is electrically coupled to an electrical distribution bus 118 of the aircraft electrical system 98 through one or more electric cables 120A, 120B (generally referred to as "120"); e.g., high voltage electric cables, power feeder cables, etc. More particularly, the controller circuitry 114 of each EM controller 102 is electrically coupled to the aircraft electrical system 98 and its electrical distribution bus 118 through the respective electric cables 120.

Each EM controller 102 and its controller circuitry 114 are configured to control operation of a respective one of the electric machines 100. For example, when operating as the electric motor, the respective EM controller 102 and its controller circuitry 114 are configured to regulate a flow of electricity from the aircraft electrical system 98 to the respective electric machine 100. This electricity flow regulation may include: (a) turning-on the flow of electricity from the aircraft electrical system 98 to the respective electric machine 100 (e.g., electrically coupling the respective electric machine 100 to the aircraft electrical system 98); (b) turning-off the flow of electricity from the aircraft electrical system 98 to the respective electric machine 100 (e.g., electrically decoupling the respective electric machine 100 from the aircraft electrical system 98); (c) moderating the flow of electricity from the aircraft electrical system 98 to the respective electric machine 100. Here, the respective EM controller 102 operates as a motor controller. In another example, when operating as the electric generator, the respective EM controller 102 and its controller circuitry 114 are configured to regulate a flow of electricity from the respective electric machine 100 to the aircraft electrical system 98. This electricity flow regulation may include: (a) turning-on the flow of electricity from the respective electric machine 100 to the aircraft electrical system 98 (e.g., electrically coupling the respective electric machine 100 to the aircraft electrical system 98); (b) turning-off the flow of electricity from the respective electric machine 100 to the aircraft electrical system 98 (e.g., electrically decoupling the respective electric machine 100 from the aircraft electrical system 98); (c) moderating the flow of electricity from the respective electric machine 100 to the aircraft electrical system 98. Here, the respective EM controller 102 operates as a generator controller.

The electric accessory system 96 includes one or more electric devices 122. The electric devices 122 may include one or more electric actuators, one or more electric pumps, one or more electric valves and/or one or more fluid separator(s) (e.g., de-oiler(s)). The electric actuator(s) may include one or more electric linear actuators and/or one or more electric rotary actuators. The electric pump(s) may include one or more electric liquid pumps and/or one or more electric gas pumps (e.g., electric air compressor(s)). The electric devices 122 of FIG. 2 may be configured as part of one or more sub-systems for the aircraft propulsion system 22 and its turbine engine 24. Examples of these sub-systems include, but are not limited to: a fuel system for delivering the fuel to the fuel injectors (see FIG. 1); a lubrication system for delivering lubricant (e.g., oil) to one or more lubricated components (e.g., bearing(s), gear system(s), seal system(s), etc.) of the aircraft propulsion system 22 and its turbine engine 24; a cooling system for delivering coolant (e.g., liquid coolant, air, etc.) to one or more fluid cooled components of the aircraft propulsion system 22 and its turbine engine 24; and an actuation system for moving one or more adjustable components (e.g., variable guide vanes, a variable area nozzle, etc.) of the aircraft propulsion system 22 and its turbine engine 24. One, some or all of these sub-systems may be discrete (e.g., operationally, mechanically, fluidly, etc. independent) from one another. Alternatively, some of the sub-systems may be integrated to share, for example, a common working fluid such as the lubricant or the fuel. The present disclosure, however, is not limited to the foregoing exemplary electric devices or sub-systems which may include those electric devices.

Each electric device 122 is electrically coupled to the electrical distribution bus 118 of the aircraft electrical system 98 through one or more electric cables 124 (collectively schematically shown); e.g., high voltage electric cables, low voltage electric cables, power feeder cables, etc. Each electric device 122 may thereby receive a current of electricity from the aircraft electrical system 98 to power operation thereof.

The aircraft electrical system 98 includes the electrical distribution bus 118. This aircraft electrical system 98 may also include a power source 126 and/or a power storage 128. The electrical distribution bus 118 is electrically coupled to each of the electric machines 100 through their respective EM controllers 102. The electrical distribution bus 118 is electrically coupled to each of the electric devices 122. The electrical distribution bus 118 is also electrically coupled to the power source 126 and the power storage 128, schematically shown via 130 and 132 respectively. With this arrangement, the electrical distribution bus 118 provides an intermediate connection between the various electrical aircraft propulsion system members 100A (via 102A), 100B (via 102B), 122, 126 and/or 128. The power source 126 may be an electric generator powered by the turbine engine 24 or an electric generator powered by another aircraft powerplant; e.g., an engine of a companion aircraft propulsion system, an engine of an auxiliary power unit (APU), a fuel cell system, etc. The power storage 128 is configured to receive electricity from the electrical distribution bus 118 for storage. The power storage 128 is also configured to provide the stored electricity to the electrical distribution bus 118. The power storage 128, for example, may be configured as or otherwise include one or more electricity storage devices; e.g., batteries, super capacitors, etc. With the foregoing aircraft electrical system arrangement, the electrical current provided to one, some or all of the electric devices 122 may be received, through the electrical distribution bus 118, from any one, some or all of the electrical aircraft propulsion system members 100A, 100B, 126 and/or 128. It is also contemplated the electrical current provided to one of the electric machines 100 may be received from another one of the electric machines 100 through the aircraft electrical system 98 and its electrical distribution bus 118.

Referring to FIG. 3, the working fluid system 36 may be configured as a heat exchange and/or lubrication system for various components of the aircraft propulsion system 22. The working fluid system 36 of FIG. 3, for example, includes one or more discrete fluid circuits 134 and 136; e.g., fluidly decoupled circuits, fluidly independent circuits, etc. Each of these fluid circuits may be configured to service (e.g., cool and/or lubricate) a different set of propulsion system components. For example, the electric machine (EM) system fluid circuit 134 is configured to cool and/or lubricate at least (or only) the first electric machine 100A, the second electric machine 100B, the first EM controller 102A and the second EM controller 102B using an electric machine (EM) system circuit working fluid. The engine fluid circuit 136 is configured to cool and/or lubricate one or more components 138 of the turbine engine 24 and its engine core 50 (see also FIG. 1) using an engine circuit working fluid. Examples of the engine components 138 which may be serviced by the engine fluid circuit 136 may include, but are not limited to, engine bearing(s), the geartrain 66 (see FIG. 1), component(s) of the drivetrain(s) 110 (see FIG. 2), lubricated seal member(s) and engine heat exchanger(s).

By dividing the working fluid system 36 into the discrete fluid circuits 134 and 136, the EM system fluid circuit 134 and the engine fluid circuit 136 may each be individually tuned based on cooling and/or lubrication requirements for one or more of its serviced propulsion system components 100 and 102, 138. For example, the EM system fluid circuit 134 may be tuned for specific heat loads generated by one or more of the electric machine system members 100A, 100B, 102A and/or 102B and/or a working temperature range for one or more of the electric machine system members 100A, 100B, 102A and/or 102B. The engine fluid circuit 136 may be tuned for specific heat loads generated by one or more of the engine components 138 and/or a working temperature range for one or more of the engine components 138. To this end, the working temperature range for the electric machine system members 100A, 100B, 102A and/or 102B may be different (e.g., lower or higher) than the working temperature range for the engine components 138. Moreover, while the EM system circuit working fluid and the engine circuit working fluid may have a common composition (e.g., the same chemical constituent(s)), the EM system circuit working fluid and the engine fluid circuit 136 may alternatively have different compositions (e.g., chemical constituent(s)) to further tune one or more heat exchange and/or lubrication parameters for the respective fluid circuit 134, 136. Similarly, while the fluid circuits 134 and 136 may share one or more common operational parameters (e.g., flow rate, pressure, etc.), the EM system fluid circuit 134 and the engine fluid circuit 136 may alternatively have different operational parameters further tuned for the respective set of propulsion system components.

By providing the single EM system fluid circuit 134 for the electric machine system members 100A, 100B, 102A and 102B, the working fluid system 36 of FIG. 3 may be simplified as compared to an alternative system where different sets of the electric machine system members are configured with discrete fluid circuits. Otherwise duplicative components (e.g., pumps, heat exchangers, flow regulators, valves, flow diverters, etc.) may thereby be omitted from the working fluid system 36 of FIG. 3 to reduce overall propulsion system cost, propulsion system weight and/or propulsion system size. Moreover, an overall thermal mass of the EM system fluid circuit 134 of FIG. 3 may be increased as compared to an alternative system where different sets of the electric machine system members are configured with discrete fluid circuits. Increasing the thermal mass of the EM system fluid circuit 134 of FIG. 3 may in turn reduce transient heating effects from local heat loads. In addition, where one of the electric machines 100A, 100B is passive or dormant (e.g., depowered, disengaged, turned-off, etc.), that passive / dormant electric machine 100A, 100B and its associated (e.g., passive / dormant) EM controller 102A, 102B may operate as a heat sink for heat energy generated by the other electric machine 100B, 100A and its associated EM controller 102B, 102A under certain operating conditions. Servicing the various electric machine system members 100A, 100B, 102A and 102B of FIG. 3 with the single EM system fluid circuit 134 may thereby increase cooling efficiency under certain operating conditions.

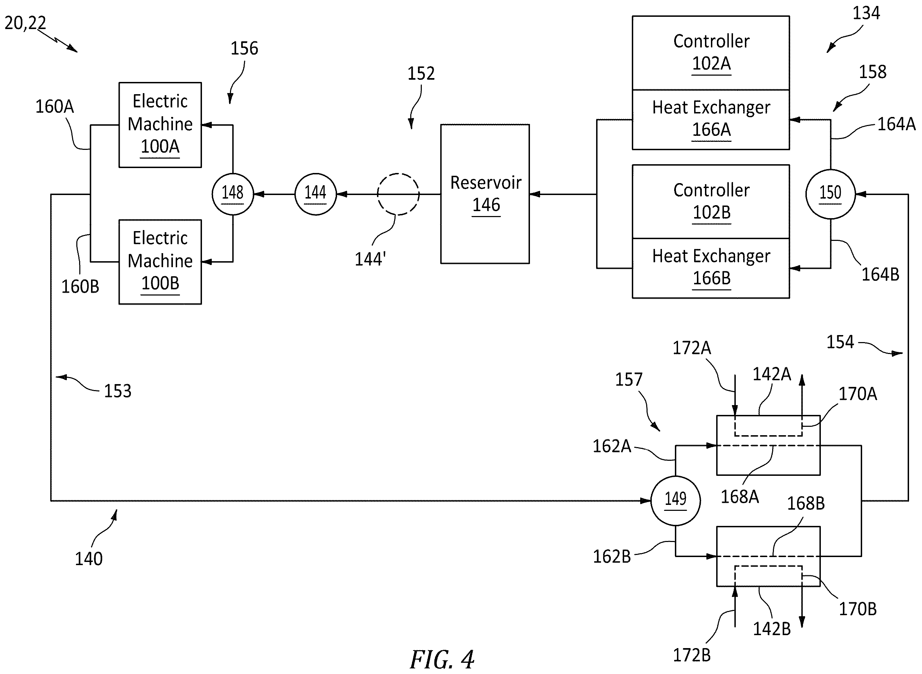

Referring to FIG. 4, the EM system fluid circuit 134 includes an electric machine (EM) system circuit path 140 (e.g., a closed loop circuit path), one or more electric machine (EM) system circuit heat exchangers 142A and 142B (generally referred to as "142"), an electric machine (EM) system circuit pump 144 and an electric machine (EM) system circuit reservoir 146. This EM system fluid circuit 134 may also include one or more electric machine (EM) system circuit flow regulators 148-150; e.g., single inlet-multi outlet flow regulation devices such as multi-way valves (e.g., two-way valves), flow diverters, etc. These EM system circuit members 142, 144, 146 and 148-150 may be structurally and/or operationally independent from any like components in the engine fluid circuit 136 (see FIG. 3), or any other fluid circuit for the aircraft propulsion system 22.

The EM system circuit path 140 may include one or more serial flow sections 152-154 and/or one or more parallel flow sections 156-158. Herein, the term "serial flow section" may describe a section of the EM system circuit path 140 which has a single pathway from an inlet into the respective serial flow section to an outlet from the respective serial flow section. By contrast, the term "parallel flow section" may describe a section of the EM system circuit path 140 which has multiple (e.g., a pair of) parallel pathways between an inlet into the respective parallel flow section to an outlet from the respective parallel flow section. The electric machine (EM) flow section 156 of FIG. 4, for example, includes a set (e.g., a pair) of parallel electric machine (EM) section legs 160A and 160B (generally referred to as "160"). The heat exchanger (HX) flow section 157 of FIG. 4 includes a set (e.g., a pair) of parallel heat exchange (HX) section legs 162A and 162B (generally referred to as "162"). The controller flow section 158 of FIG. 4 includes a set (e.g., a pair) of parallel controller section legs 164A and 164B (generally referred to as "164").

The EM system circuit members 144, 148, 149, 142, 150 and 146 of FIG. 4 are arranged inline along the EM system circuit path 140. The electric machine system members 100 and 102 of FIG. 4 are also arranged inline along the EM system circuit path 140. These electric machine system members 100 and 102 may (or may not) be interspersed with the EM system circuit members 144, 148, 149, 142, 150 and 146 along the EM system fluid circuit 134 and its EM system circuit path 140 to provide staged cooling and/or lubrication for the electric machine system 36. The first flow section 152 of FIG. 4, for example, extends serially through the EM system circuit reservoir 146 and the EM system circuit pump 144 from an inlet into the first flow section 152 to an outlet from the first flow section 152. The first EM system circuit flow regulator 148 is fluidly coupled to and is disposed between (a) the outlet from the first flow section 152 and (b) an inlet into the first EM section leg 160A and an inlet into the second EM section leg 160B. Each EM section leg 160 is fluidly coupled to and extends through a respective one of the electric machines 100A, 100B from the inlet into the respective EM section leg 160 to an inlet into the second flow section 153. Here, the EM section legs 160 and thereby the electric machines 100A and 100B are fluidly coupled in parallel between the first flow section 152 and the second flow section 153. The second EM system circuit flow regulator 149 is fluidly coupled to and is disposed between (a) an outlet from the second flow section 153 and (b) an inlet into the first HX section leg 162A and an inlet into the second HX section leg 162B. Each HX section leg 162 is fluidly coupled to and extends through a respective one of the EM system circuit heat exchangers 142 from the inlet into the respective HX section leg 162 to an inlet into the third flow section 154. Here, the HX section legs 162 and thereby the EM system circuit heat exchangers 142 are fluidly coupled in parallel between the second flow section 153 and the third flow section 154. The third EM system circuit flow regulator 150 is fluidly coupled to and is disposed between (a) an outlet from the third flow section 154 and (b) an inlet into the first controller section leg 164A and an inlet into the second controller section leg 164B. Each controller section leg 164 may be fluidly coupled to and extend through a controller heat exchanger 166A, 166B (generally referred to as "166"; e.g., a cooling plate) from the inlet into the respective controller section leg 164 to the inlet into the first flow section 152. Here, each EM controller 102A, 102B may be mounted to and/or otherwise thermally coupled to a respective one of the controller heat exchangers 166A, 166B thereby arranging that EM controller 102A, 102B in thermal communication with the EM system circuit path 140 and its respective controller section leg 164A, 164B. The controller section legs 164 and thereby the respective members 102A and 166A, 102B and 166B are fluidly coupled, thermally coupled and/or otherwise arranged in parallel between the third flow section 154 and the first flow section 152.

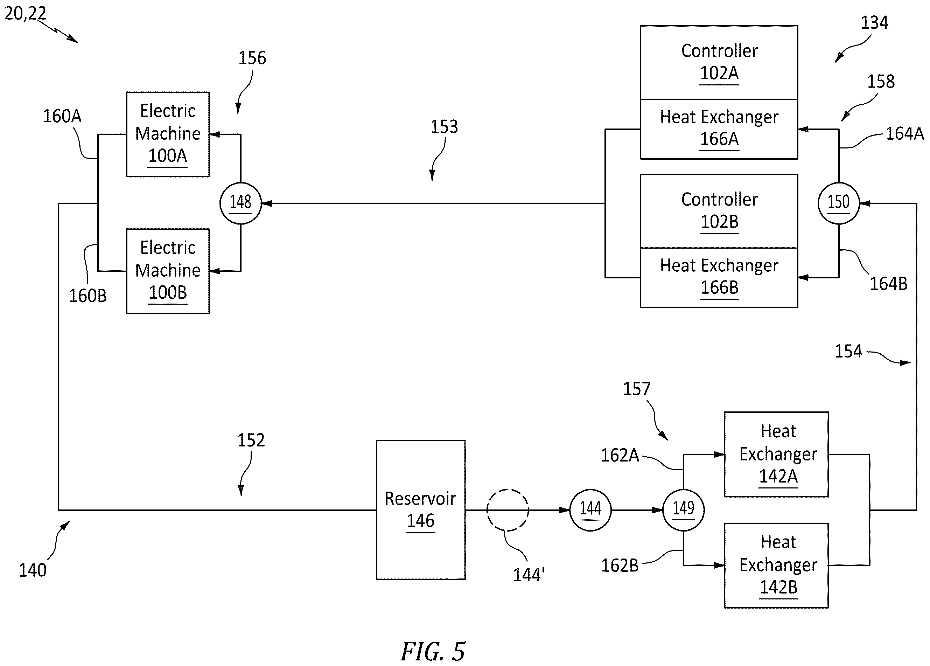

With the arrangement of FIG. 4, the EM system circuit reservoir 146 and the EM system circuit pump 144 are downstream of the EM controllers 102 and their controller heat exchangers 166 along the EM system fluid circuit 134 and its EM system circuit path 140. The EM system circuit reservoir 146 and the EM system circuit pump 144 are upstream of the electric machines 100 along the EM system fluid circuit 134 and its EM system circuit path 140. The EM system circuit heat exchangers 142 are downstream of the electric machines 100 along the EM system fluid circuit 134 and its EM system circuit path 140. The EM system circuit heat exchangers 142 are upstream of the EM controllers 102 and their controller heat exchangers 166 along the EM system fluid circuit 134 and its EM system circuit path 140. The relatively temperature sensitive electronics of the EM controllers 102 of FIG. 4 may thereby be cooled using lower temperature EM system circuit working fluid, whereas the less temperature sensitive components of the electric machines 100 of FIG. 4 may be cooled and/or lubricated using higher temperature EM system circuit working fluid. In addition, the EM system circuit pump 144 may pump relatively warm and, thus, less viscous EM system circuit working fluid for circulation within the EM system fluid circuit 134 and its EM system circuit path 140. The present disclosure, however, is not limited to such an exemplary arrangement. For example, referring to FIG. 5, the relative positions of the first flow section 152 and the second flow section 153 may be reversed such that the EM system circuit reservoir 146 and/or the EM system circuit pump 144 are between the electric machines 100 and the EM system circuit heat exchangers 142 along the EM system fluid circuit 134 and its EM system circuit path 140. Moreover, it is contemplated the EM system fluid circuit 134 of FIG. 4 or 5 may (or may not) include various additional components (not shown) arranged along the EM system circuit path 140 such as filter(s), sensor(s), additional heat exchanger(s), additional component(s), valve(s), pump(s), etc. For example, the EM system fluid circuit 134 of FIG. 4 or 5 may (or may not) also include a second EM system circuit pump 144' for redundancy.

Referring to FIG. 4, each EM system circuit heat exchanger 142A, 142B includes one or more internal intra-circuit heat exchanger (HX) working fluid passages 168A, 168B (generally referred to as "168"; one schematically shown in FIG. 4 for ease of illustration) and one or more internal extra-circuit heat exchanger (HX) working fluid passages 170A, 170B (generally referred to as "170"; one schematically shown in FIG. 4 for ease of illustration). Each of these HX working fluid passages 168, 170 may be partially or completely formed by the respective EM system circuit heat exchanger 142. Each of the HX working fluid passages 168, 170 also extends within and/or through the respective EM system circuit heat exchanger 142. The intra-circuit HX working fluid passages 168 may form a section of or may otherwise be fluidly coupled inline with the respective HX section leg 162. The extra-circuit HX working fluid passages 170 may form a section of or may otherwise be fluidly coupled inline with a path 172A, 172B (generally referred to as "172") of another (e.g., liquid and/or gas) working fluid circuit. The intra-circuit HX working fluid passages 168 are thereby fluidly discrete from the extra-circuit HX working fluid passages 170 within the respective HX system circuit heat exchanger 142. Within each EM system circuit heat exchanger 142, the intra-circuit HX working fluid passages 168 and the extra-circuit HX working fluid passages 170 may be arranged to configure that EM system circuit heat exchanger 142 as a crossflow heat exchanger, a counterflow heat exchanger, a parallel flow heat exchanger, or a hybrid heat exchanger with a combination crossflow, counterflow and/or parallel flow arrangement.

The first EM system circuit heat exchanger 142A may be configured as a liquid-to-air heat exchanger (e.g., a radiator). More particularly, the working fluid flowing through (e.g., circulated within) the HX system fluid circuit 134 and its HX system circuit path 140 may be a liquid working fluid. This liquid working fluid may function as a lubricant and/or a heat exchange fluid for one or more of the propulsion system components (e.g., 100A, 100B, 102A and 102B) being serviced by the EM system fluid circuit 134. The liquid working fluid, for example, may be or otherwise include a liquid lubricant (e.g., oil) and/or a liquid coolant (e.g., refrigerant). By contrast, a second working fluid flowing within the second circuit path 172A through the first EM system circuit heat exchanger 142A may be a gas. This gas may be ambient air or compressed air bled from an engine flowpath (e.g., the bypass flowpath 74 of FIG. 1, the core flowpath 84 of FIG. 1, etc.) or another second working fluid source.

The second EM system circuit heat exchanger 142B may be configured as a liquid-to-liquid heat exchanger. More particularly, a second working fluid flowing within the second circuit path 172B through the second EM system circuit heat exchanger 142B may be a liquid such as fuel, lubricant and/or coolant for another system of the aircraft propulsion system, which other system may or may not include the engine fluid circuit 136 of FIG. 3.

The EM system circuit pump 144 of FIG. 4 is configured to direct and/or regulate a flow of the EM system circuit working fluid through the EM system circuit path 140 from an outlet from (e.g., a supply of) the EM system circuit reservoir 146, through the various elements (optionally 144'), 144, 148, 100, 149, 142, 150 and 166, to an inlet into (e.g., a return of) the EM system circuit reservoir 146.

The EM system circuit reservoir 146 is configured to contain a quantity of the EM system circuit working fluid before, during and/or after fluid system operation. The EM system circuit reservoir 146, for example, may be configured as or otherwise include a tank, a cylinder, a pressure vessel, a bladder or any other type of (e.g., liquid) storage container. In some embodiments, the EM system circuit reservoir 146 may be un-vented.

Each EM system circuit flow regulator 148, 149, 150 is configured to selectively direct a flow of the EM system circuit working fluid received from the respective upstream flow section 152, 153, 154 into one or more of the respective downstream section legs 160, 162, 164. For example, during one mode of operation, a respective EM system circuit flow regulator 148, 149, 150 may divert the EM system circuit working fluid received from the respective upstream flow section 152, 153, 154 such that all of that EM system circuit working fluid flows through the respective downstream first section leg 160A, 162A, 164A. During another mode of operation, the respective EM system circuit flow regulator 148, 149, 150 may divert the EM system circuit working fluid received from the respective upstream flow section 152, 153, 154 such that all of that EM system circuit working fluid flows through the respective downstream second section leg 160B, 162B, 164B. During still another mode of operation, the respective EM system circuit flow regulator 148, 149, 150 may selectively divert the EM system circuit working fluid received from the respective upstream flow section 152, 153, 154 such that (a) a first portion of the EM system circuit working fluid flows through the respective downstream first section leg 160A, 162A, 164A and (b) a second portion of the EM system circuit working fluid flows through the respective downstream second section leg 160B, 162B, 164B. Here, the second portion of the EM system circuit working fluid may be equal to or different (e.g., greater or less) than the second portion of EM system circuit working fluid depending upon cooling and/or lubrication requirements for the components 100, 142, 102 along the respective downstream flow section 156, 157, 158.

During operation of the EM system fluid circuit 134 of FIG. 4, the EM system circuit pump 144 directs (e.g., pumps) relatively cool EM system circuit working fluid out of the EM system circuit reservoir 146 into one or more of the downstream electric machines 100. As the EM system circuit working fluid flows through each electric machine 100, heat energy generated by the respective electric machine 100 may be transferred into the EM system circuit working fluid. The heat energy transfer may thereby dissipate the heat energy in (e.g., cool) the respective electric machine 100 while also heating the EM system circuit working fluid. The EM system circuit working fluid may also lubricate one or more internal components within the respective electric machine 100. The now heated working fluid is directed away from the electric machine(s) 100 into one or more of the EM system circuit heat exchangers 142. Within each EM system circuit heat exchanger 142, at least some or all of the heat energy previously transferred into the EM system circuit working fluid from the electric machine(s) 100 and/or the EM controller(s) 102 (as described below) may be transferred out of the EM system circuit working fluid into the respective second working fluid in the respective second circuit path 172 thereby cooling the EM system circuit working fluid. The now cooled EM system circuit working fluid is directed from the EM system circuit heat exchanger(s) 142 into one or more of the controller heat exchangers 166. As the EM system circuit working fluid flows through each controller heat exchanger 166, the heat energy generated by the respective EM controller 102 may be transferred into the EM system circuit working fluid through the respective controller heat exchanger 166. The heat energy transfer may thereby dissipate the heat energy in (e.g., cool) the respective EM controller 102 while also heating the EM system circuit working fluid. This partially heated EM system circuit working fluid is then directed from the controller heat exchanger(s) 166 back into the EM system circuit reservoir 146 of subsequent recirculation.

Referring to FIG. 3, the engine fluid circuit 136 includes an engine circuit path 174, an engine circuit heat exchanger 176, an engine circuit pump 178 and an engine circuit reservoir 180. These engine circuit components 176, 180 and 178 may be arranged inline along the engine circuit path 174. The engine circuit path 174 of FIG. 3, for example, extends serially through the engine circuit components 176, 180 and 178 in a closed loop. The engine circuit path 174 of FIG. 3 is also (a) fluidly coupled to and may extend in series or in parallel through and/or (b) may be otherwise arranged in thermal communication with the engine components 138 serviced by the engine fluid circuit 136. Note, while the engine components 138 are shown as being upstream of the engine circuit heat exchanger 176 along the engine circuit path 174, it is contemplated one or more or all of these engine components 138 may alternatively be downstream of the engine circuit heat exchanger 176 along the engine circuit path 174. In addition or alternatively, while the engine circuit reservoir 180 is shown as being downstream of the engine circuit heat exchanger 176 along the engine circuit path 174, it is contemplated the engine circuit reservoir 180 may alternatively be upstream of the engine circuit heat exchanger 176 along the engine circuit path 174. Moreover, it is contemplated the engine fluid circuit 136 may (or may not) include various additional components (not shown) arranged along the engine circuit path 174 such as filter(s), sensor(s), additional heat exchanger(s), additional component(s), valve(s), pump(s), etc. The present disclosure therefore is not limited to the exemplary engine fluid circuit arrangement shown in FIG. 3.

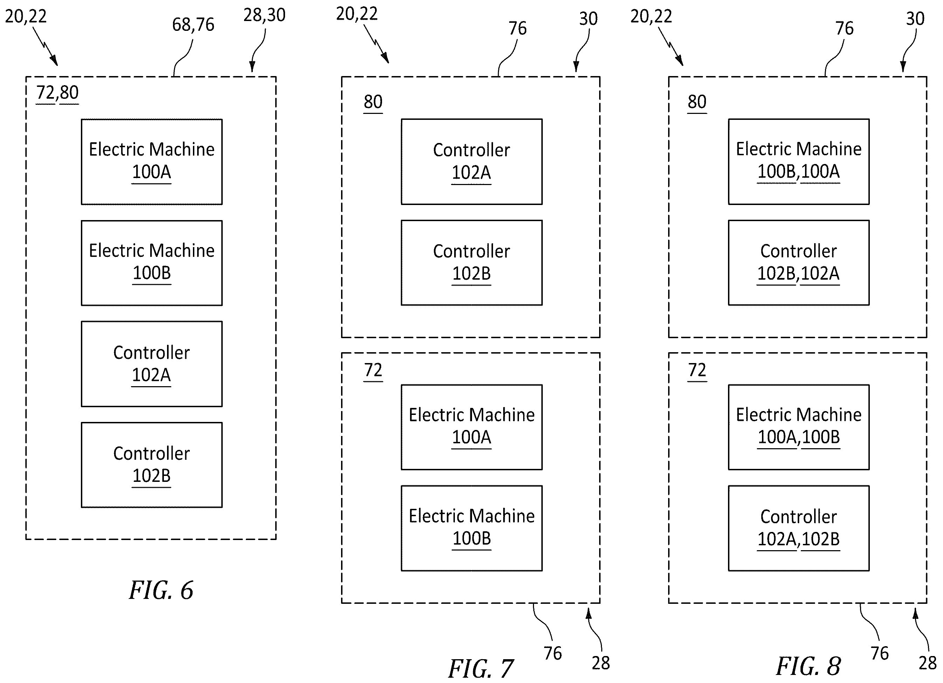

In some embodiments, referring to FIG. 6, the electric machine system members 100A, 100B, 102A and 102B may be mounted and/or otherwise arranged with a common aircraft structure. For example, the electric machine system members 100A, 100B, 102A and 102B of FIG. 6 may be mounted and/or otherwise arranged with one of the housing structures 28, 30 and its respective engine case 68, 76; e.g., within a respective housing compartment 72, 80. In other embodiments, referring to FIG. 7, one or more of the electric machines 100A and 100B may each be located remote from its associated EM controller 102A and 102B. For example, each electric machine 100 of FIG. 7 may be mounted and/or otherwise arranged with the inner housing structure 28 and its inner case 68; e.g., within the inner housing compartment 72. This may thereby locate the electric machines 100 closer to the engine rotating structure 60 (see FIGS. 1 and 2) to which the electric machines 100 may be coupled. By contrast, each EM controller 102 of FIG. 7 may be mounted and/or otherwise arranged with the outer housing structure 30 and its outer case 76; e.g., within the outer housing compartment 80. This may thereby locate the EM controllers 102 in a cooler region away from, for example, the relatively hot engine core 50 (see FIG. 1). In still other embodiments, referring to FIG. 8, one of the electric machines 100A, 100B and its associated EM controller 102A, 102B may be mounted and/or otherwise arranged with the inner housing structure 28 and its inner case 68; e.g., within the inner housing compartment 72. The other one of the electric machines 100B, 100A and its associated EM controller 102B, 102A may be mounted and/or otherwise arranged with the outer housing structure 30 and its outer case 76; e.g., within the outer housing compartment 80.

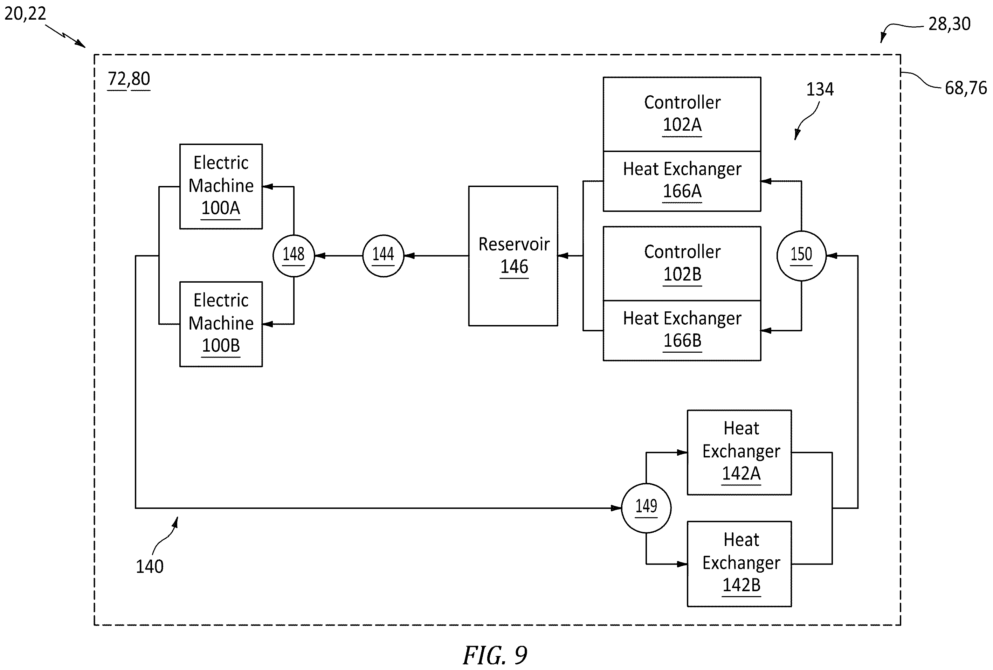

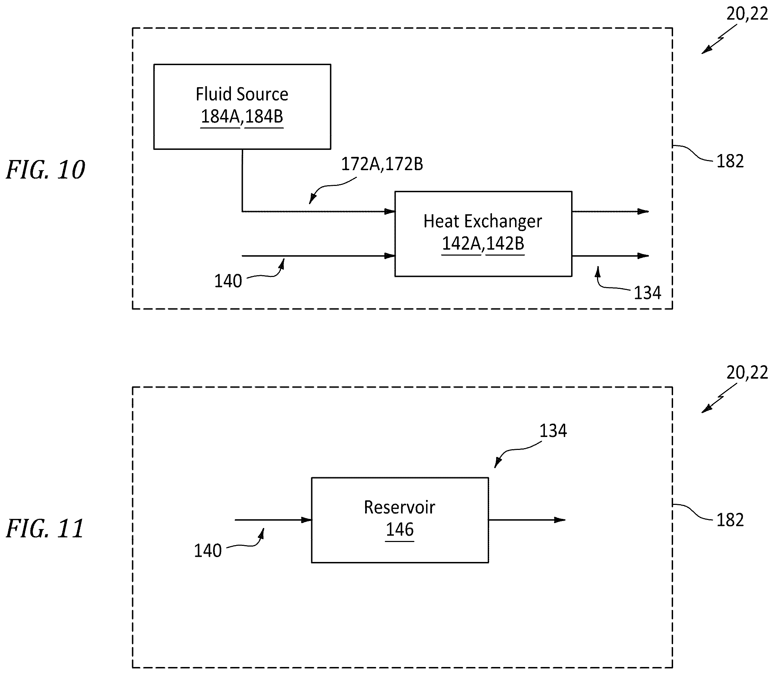

In some embodiments, referring to FIG. 9, one or more or all of the EM system circuit members 142, 144, 146 and 148-150 may be arranged in relatively close proximity to and/or co-located with one or more of all of the electric machine system members 100 and 102 serviced by the EM system fluid circuit 134. For example, each EM system circuit member 142, 144, 146 and 148-150 of FIG. 9 as well as each serviced electric machine system member 100, 102 may be mounted and/or otherwise arranged with one of the housing structures 28, 30 and its respective engine case 68, 76; e.g., within a respective housing compartment 72, 80. With this arrangement, a length of the EM system circuit path 140 may be reduced, fluid losses along the EM system circuit path 140 may be reduced, routing complexity for the EM system circuit path 140 may be simplified, and/or supports and/or mounts for the EM system fluid circuit 134 may be simplified. The present disclosure, however, is not limited to such an exemplary arrangement. One or more of the EM system circuit members 142, 144, 146 and 148-150, for example, may alternatively be arranged remote from the electric machine(s) 100 and/or the EM controller(s) (see FIGS. 4 and 5). For example, referring to FIG. 10, at least one of the EM system circuit heat exchangers 142 may be remotely located with another structure (e.g., 182) of the aircraft propulsion system 22 (or another structure of the aircraft remote from the aircraft propulsion system 22) to facilitate packaging and/or to position the respective EM system circuit heat exchanger(s) 142 closer to a source 184A, 184B of the second working fluid. In another example, referring to FIG. 11, the EM system circuit reservoir 146 may be remotely located with another structure (e.g., 182) of the aircraft propulsion system 22 (or another structure of the aircraft remote from the aircraft propulsion system 22) to facilitate packaging and/or to position the EM system circuit reservoir 146 in a cooler region away from, for example, the relatively hot engine core 50 (see FIG. 1). Examples of this other structure 182 of FIGS. 10 and 11 include, but are not limited to, the other one of the housing structures 30, 28 and its respective engine case 76, 68 of FIG. 1, a bifurcation 186 between the inner housing structure 28 and the outer housing structure 30 of FIG. 1, a pylon structure or another airframe component of the aircraft.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An apparatus for an aircraft, comprising:
a turbine engine (24);
a first electric machine (100A) operatively coupled to the turbine engine;
a first controller (102A) configured to control operation of the first electric machine;
a second electric machine (100B) operatively coupled to the turbine engine;
a second controller (102B) configured to control operation of the second electric machine; and
a first fluid circuit (134) configured to circulate a first liquid to cool and/or lubricate the first electric machine, the first controller, the second electric machine and the second controller.

2. The apparatus of claim 1, wherein
the first controller is configured upstream of the first electric machine along the first fluid circuit; and/or
the second controller is configured upstream of the second electric machine along the first fluid circuit.

3. The apparatus of claim 1 or 2, wherein:
the first controller and the second controller are arranged in parallel along the first fluid circuit; and/or
the first electric machine and the second electric machine are arranged in parallel along the first fluid circuit.

4. The apparatus of claim 1, 2 or 3, wherein:
the first fluid circuit comprises a first circuit reservoir (146) configured to contain a quantity of the first liquid, and the first circuit reservoir is arranged along the first fluid circuit at least one of:
downstream from the first controller and upstream of the first electric machine; and/or
downstream from the second controller and upstream of the second electric machine; or
the first fluid circuit comprises a first circuit reservoir (146) configured to contain a quantity of the first liquid, and the first circuit reservoir is arranged along the first fluid circuit at least one of:
upstream of the first controller and downstream from the first electric machine; and/or upstream of the second controller and downstream of the second electric machine.

5. The apparatus of any preceding claim, wherein:
the first fluid circuit comprises a first circuit pump (144) configured to pump the first liquid through the first fluid circuit, and the first circuit pump is arranged along the first fluid circuit at least one of:
downstream from the first controller and upstream of the first electric machine; and/or
downstream from the second controller and upstream of the second electric machine; or
the first fluid circuit comprises a first circuit pump (144) configured to pump the first liquid through the first fluid circuit, and the first circuit pump is arranged along the first fluid circuit at least one of:
upstream of the first controller and downstream from the first electric machine; and/or
upstream of the second controller and downstream of the second electric machine.

6. The apparatus of any preceding claim, wherein the first fluid circuit comprises a heat exchanger (142A, 142B), and the heat exchanger is arranged along the first fluid circuit at least one of:
upstream of the first controller and downstream from the first electric machine; and/or
upstream of the second controller and downstream of the second electric machine.

7. The apparatus of any preceding claim, wherein:
the first fluid circuit comprises a heat exchanger (142A), and the heat exchanger comprises a liquid-to-air heat exchanger; and/or
the first fluid circuit comprises a heat exchanger (142B), and the heat exchanger comprises a liquid-to-liquid heat exchanger.

8. The apparatus of any preceding claim, wherein the first fluid circuit includes:
a first heat exchanger (142A);
a second heat exchanger (142B); and
a flow regulator (149) configured to selectively direct the first liquid into at least one of the first heat exchanger or the second heat exchanger.

9. The apparatus of any preceding claim, wherein the first fluid circuit includes:
a first controller section leg (164A) in thermal communication with the first controller;
a second controller section leg (164B) in thermal communication with the second controller; and
a flow regulator (150) configured to selectively direct the first liquid into at least one of the first controller section leg or the second controller section leg.

10. The apparatus of any preceding claim, wherein the first fluid circuit includes a flow regulator (148) configured to selectively direct the first liquid into at least one of the first electric machine or the second electric machine.

11. The apparatus of any preceding claim, wherein the turbine engine comprises:
a first rotating structure (60A) comprising a first bladed rotor; and
a second rotating structure (60B) comprises a second bladed rotor, the second rotating structure operable to rotate independent of the first rotating structure;
the first electric machine operatively coupled to the first rotating structure; and
the second electric machine operatively coupled to the second rotating structure.

12. The apparatus of any preceding claim, wherein:
the turbine engine comprises a ducted propulsor rotor configured to generate aircraft thrust; and/or
the turbine engine comprises an engine case (68); and
at least one of the first electric machine or the second electric machine is arranged with the engine case; and
at least one of the first controller or the second controller is arranged remote from the engine case.

13. The apparatus of any preceding claim, further comprising a second fluid circuit (136) configured to circulate a second liquid to cool and/or lubricate one or more components (138) of the turbine engine, the second fluid circuit fluidly discrete from the first fluid circuit.

14. An apparatus for an aircraft, comprising:
an aircraft propulsion system (22) including a propulsor rotor (52), an engine case (68), a first electric machine (100A), a second electric machine (100B), a first controller (102A), a second controller (102B), an electrical system (98) and a first fluid circuit (134);
the engine case radially next to and circumscribing the propulsor rotor;
the first controller configured to electrically couple the first electric machine to the electrical system, the first controller further configured to control operation of the first electric machine;
the second controller configured to electrically couple the second electric machine to the electrical system, the second controller further configured to control operation of the second electric machine; and
the first fluid circuit configured to circulate a first liquid to service the first electric machine, the second electric machine, the first controller and the second controller.

15. An apparatus for an aircraft, comprising:
a turbofan engine (32) comprising an inner case (68) and an outer case (76) spaced radially outboard from the inner case;
a first electric machine (100A) arranged with the inner case;
a first controller (102A) configured to control operation of the first electric machine, the first controller arranged with the outer case;
a second electric machine (100B) arranged with the inner case;
a second controller (102B) configured to control operation of the second electric machine, the second controller arranged with the outer case; and
a first fluid circuit (134) configured to circulate a first liquid to service the first electric machine, the first controller, the second electric machine and the second controller.
